(19) **Europäisches Patentamt**
**European Patent Office**
**Office européen des brevets**

(11) **EP 4 787 295 A1**

(12) **EUROPEAN PATENT APPLICATION**

(43) Date of publication:
**05.08.2026 Bulletin 2026/32**

(21) Application number: **25155170.1**

(22) Date of filing: **31.01.2025**

(51) International Patent Classification (IPC):
**G06T 7/00** *(2017.01)* **G06T 7/174** *(2017.01)*
**G06T 7/20** *(2017.01)* **G06V 20/69** *(2022.01)*

(52) Cooperative Patent Classification (CPC):
**G06T 7/0012; G06T 7/0016; G06T 7/174;**
**G06T 7/20; G06V 20/698;** G06T 2207/10016;
G06T 2207/10056; G06T 2207/20081;
G06T 2207/20084; G06T 2207/30072

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Sartorius BioAnalytical Instruments, Inc.**
**Bohemia, NY 11716 (US)**

(72) Inventors:
• **Khalid, Nabeel**
**Kaiserslautern (DE)**
• **Ahmed, Sheraz**
**Kaiserslautern (DE)**
• **Lovell, Gillian**
**Royston, Hertfordshire (GB)**
• **Caroprese, Maria**
**Royston, Hertfordshire (GB)**
• **Trygg, Johan**
**Umeå (SE)**

(74) Representative: **Müller-Boré & Partner**
**Patentanwälte PartG mbB**
**Friedenheimer Brücke 21**
**80639 München (DE)**

Remarks:
Amended claims in accordance with Rule 137(2) EPC.

(54) **METHOD, PRODUCT AND SYSTEM FOR CELL TRACKING IN CO-CULTURES**

(57) Summarizing the invention, a computer-implemented method is provided. The method comprises: receiving an input video comprising a sequence of phase-contrast images of a co-culture of cells in a cell culture vessel, wherein the co-culture comprises at least two different cell types; performing, by running a machine learning model on at least one processing unit: segmentation to obtain a detection of at least part of the cells in the input video, and classification to obtain a categorization of the at least part of the cells in the input video into the at least two different cell types; determining trajectories and interaction parameters of at least part of the detected and categorized cells across at least part of the sequence of phase-contrast images; providing an output comprising the sequence of phase-contrast images, the detection, the categorization, the trajectories and the interaction parameters.

Figure 1

EP 4 787 295 A1

## Description

Technical Field

The following description relates to object tracking for cell microscopy.

Background

Object tracking for cell microscopy involves detecting objects of interest (namely, cells) within an image and following their position in subsequent images acquired over time. Co-cultures are biological systems in which more than one type of cell is present and cell tracking in co-cultures is particularly challenging as there is a vast variation of cell morphology and motility. However, co-cultures have higher biological relevance than cells in isolation and are of critical interest in the fields of oncology, immune-oncology and cell therapy.

Summary

It is an object of the invention to provide accurate and efficient cell tracking for co-cultures.

The achievement of this object in accordance with the invention is set out in the independent claims. Further developments of the invention are the subject matter of the dependent claims.

According to one aspect, a computer-implemented method is provided. The method comprises:

receiving an input video comprising a sequence of phase-contrast images of a co-culture of cells in a cell culture vessel, wherein the co-culture comprises at least two different cell types;
performing, by running a machine learning model on at least one processing unit: segmentation to obtain a detection of at least part of the cells in the input video, and classification to obtain a categorization of the at least part of the cells in the input video into the at least two different cell types;
determining trajectories and interaction parameters of at least part of the detected and categorized cells across at least part of the sequence of phase-contrast images; providing an output comprising the sequence of phase-contrast images, the detection, the categorization, the trajectories and the interaction parameters.

The method is computer-implemented in that it is carried out by one or more computing devices. According to the present disclosure, a computing device may comprise at least one memory and at least one processor. A computing device may also comprise one or more input/output units. Exemplarily, a computing device may be a distributed computing system, e.g. a computing network.

The input video comprises a plurality of images in a temporal sequence, i.e. a plurality of images recorded at a respective plurality of timepoints. For instance, the time interval between two consecutive timepoints may be about one minute. The input video may have a start timepoint and an end timepoint, wherein the length of the input video may be given by the difference between the end timepoint and the start timepoint. The input video comprises at least two images. The images may also be referred to as "video frames".

The images comprised in the input video are phase-contrast images, i.e. obtained with phase-contrast microscopy. Phase-contrast microscopy is a non-destructive technique that, thus, enables living cells in a culture to be visualized in their natural state. This technique particularly is based on the fact that different sample structures (e.g. different components of the cells) have different densities, and, consequently, different refractive indices. The difference in the refractive indices causes phase shifts of the light waves that pass through the sample structures, and these phase shifts are converted into differences in the waves' amplitude that can be detected by the human eye. The phase-contrast images specifically are in greyscale.

A co-culture comprises cells of at least two different types that are grown in a culture medium. A cell type may be a cell origin, a cell line or a cell function.

A cell origin particularly refers to the origin of the cell within the body; examples of cell types based on origin may be blood cells (leukocytes), brain cells (neurons, microglia, astrocytes), heart cells (cardiomyocytes).

A cell line particularly defines a population of cells that can be maintained in culture for an extended period of time, retaining stability of certain phenotypes and functions; cell lines are usually clonal, meaning that the entire population originated from a single common ancestor cell.

A cell function particularly refers to the function of the cell within the co-culture; for example in a tumor - immune co-culture, the immune cells (which may be referred to as the "effector cells" or "killing cells") may be one type of cell having the function of killing the tumor cells, while the function of the tumor cells may be to be targets for the immune cells (and, thus, may be referred to as "target cells"). In another example, neuronal cells have the function of connecting to each other and transmitting signals via changing intracellular calcium concentrations.

Accordingly, in a co-culture, there are at least a first cell and a second cell, wherein the first cell is of a first type and the second cell is of a second type, the second type being different from the first type, e.g. because of the cell origin and/or the cell line and/or the cell function. Usually, the co-culture may comprise at least a first group of cells and a second group of cells, wherein the cells in the first group are of a first type and the cells in the second group are of a second type. In some examples, the co-culture may comprise only a first group and a second group of cells. In other examples, the co-culture may comprise more than two groups of cells.

If a co-culture comprises a total number $N$ of cells, each image may comprise a proper or improper subset of the cells, i.e. the number of cells $M_i$ in the image $i$ is $M_i \leq N.$ Exemplarily, $M_i < N$. Furthermore, $M_i > 1$, exemplarily $M_i > 100$, further exemplarily $M_i > 1000$. The number of cells may vary from image to image, e.g. since some cells may move in or out of the video frame, some cells may die etc. If the set of cells in an image is $S_i$, there may be at least one subset of cells that are present in all images of the input video, namely $\bigcap_{i=1}^{K} S_i \neq \emptyset$, wherein $K$ is the total number of images.

The co-culture particularly is in a cell culture vessel. Exemplarily, the cell culture vessel may be a microplate, which is a plate containing a plurality of sample wells, usually arranged in a matrix such as a rectangular matrix. In particular, the co-culture may be in one sample well of the microplate. A microplate may comprise between 6 and 1536 sample wells, in particular between 6 and 384 sample wells. The capacity of each well may be between about 3 mL and about 25 μL. Accordingly, the cells of the co-culture are not under flow.

An exemplarily microplate is the Incucyte® Imagelock 96-well microplate by Sartorius. This vessel contains markings which enable accurate image registration (taking an image at the exact same location at each acquisition, which improves cell tracking accuracy). Other examples of microplates may include 6, 12, 24, 48, 96 and 384-well plates produced by Corning, CytoOne, Eppendorf, Greiner, IBIDI, Iwaki, Matrix, MatTek, Nunc, Revvity, Sarstedt, S-BIO, TPP.

The method further comprises performing segmentation to obtain a detection of at least part of the cells in the input video, and classification to obtain a categorization of the at least part of the cells in the input video into the at least two different types of cells. In particular, the segmentation and classification may be performed for each image of the input video one by one.

The segmentation particularly is the process that recognizes the cells in the input video, or, said otherwise, that detects the presence of the cells in the input video. Specifically, instance segmentation may be performed. Detecting a cell may comprise identifying a region (e.g. a plurality of adjacent pixels) of an image as being the representation of a cell. One or more features of the region may be analyzed to determine whether there is a cell. Exemplarily, cells may be detected by detecting the cell boundaries, since the cell boundaries may have a higher contrast than other regions of the cell. In a particular example, the segmentation may comprise using anchor-based detectors, which, e.g. when optimized with tailored anchor settings and feature refinements, effectively adapt to variable cell shapes in co-culture images.

The classification particularly is the process that assigns the cells to a cell type of the at least two different cell types. In other words, a cell may be categorized as belonging to a given cell type. The cell type may be determined based on features of the cells, e.g. size or shape.

The segmentation and classification particularly are integrated, i.e. are not performed separately one after the other but constitute a unified process that provides in a single pass pixel-level detection and categorization. Said otherwise, segmentation and classification are performed in a single stage. This makes the approach better suited for the complexities of phase-contrast images, in particular of co-cultures. Furthermore, unlike in some conventional approaches, no manual, a *priori* selection of different segmentation models for different cell types is necessary. Therefore, the method is more adaptable to varying cell types and complex co-cultures.

Specifically, the segmentation and classification are carried out using a machine learning model. The machine learning model may be a neural network, in particular a convolutional neural network. An image of the input video is provided as input to the machine learning model. For instance, the image may be represented by a plurality of values on a greyscale, with 0.0 representing white and 1.0 representing black, each value corresponding to a pixel in the image. This plurality of values may be provided as input to the machine learning model, e.g. to the neurons in the input layer of a neural network. Exemplarily, the machine learning model, such as the convolutional neural network, may comprise a spatial attention mechanism, such as a convolution layer that generates a spatial attention map.

The output provided by the machine learning model is the detection and the categorization of the cells. The detection may be provided in the form of bounding boxes and segmentation masks. A bounding box may be the smallest rectangular area within which a cell lies. A bounding box may be associated with a confidence score. A segmentation mask may be a pixel-level representation of portion of a given image of the input video, wherein each pixel is labeled to indicate whether it belongs to a specific object (e.g. a cell) or the background. In particular, one segmentation mask for each object may be generated, which e.g. allows precise differentiation between overlapping or adjacent cells. Since the segmentation masks are at the pixel level, they are also referred to as "pixel-wise segmentation masks". Segmentation masks help resolve overlaps in dense co-cultures by differentiating between overlapping cells more effectively than bounding boxes.

The bounding boxes may serve as detection proposals that are then refined by generating pixel-wise masks within the bounding boxes. This hierarchical approach ensures that the segmentation task is localized, reducing computational complexity and improving accuracy by focusing only on detected objects (i.e. the bounding boxes) rather than the entire image.

The categorization may be provided in the form of type probability scores assigned to each cell for the different cell types; the type probability scores may take values between 0 and 1. Based on the value of the type probability scores, a type label may be assigned to each cell, namely the label corresponding to the type with the largest probability.

As explained above, the machine learning model particularly performs the segmentation and classification in a unified manner, so that the bounding boxes, segmentation masks, and type probability scores/labels are obtained concomitantly. This means that these outputs are not obtained temporally one after the other, but rather at least partly simultaneously. Furthermore, as explained above, the refinement from bounding boxes to segmentation masks is not iterative, which makes the process faster and more resource-efficient.

The method further comprises determining trajectories and interaction parameters of at least part of the detected and categorized cells across at least part of the sequence of phase-contrast images. In other words, the positions of at least some of the detected and categorized cells are determined in a plurality of images of the input video, so that trajectories of the cells over time may be derived. Indeed, a trajectory is a sequence of positions over time: since the images correspond to different timepoints, so do the positions determined in each image.

Accordingly, the position of a cell can be followed across a plurality of consecutive images in the sequence. In some cases, e.g. if a cell is present in all images of the input video, the position of the cell may be determined in each image of the sequence. In other cases, the position may be determined only across a part of the sequence, i.e. in a plurality of images that is a proper subset of the images in the sequence.

By determining the trajectory of a cell across a plurality of images, the detected instances of a given cell in the various images are associated with one another, thus uniquely identifying the cell. In particular, each cell may be assigned a unique ID that remains consistent across frames, allowing individual cells to be followed over time. This ensures that even as cells move, divide, or interact, their identity remains intact throughout the plurality of images.

In particular, the segmentation masks of the detected cells allow the method to identify unique cell features, such as size, shape, and texture, which are useful for re-identifying the same cell across frames. By comparing the positions of segmentation masks in consecutive frames, the displacement and movement of individual cells can be accurately determined.

In the field, the term "tracking" is used in the expression "cell tracking" (e.g. "the cell tracking challenge"), which refers to both detection and trajectory determination, but also to refer only to the trajectory determination. To avoid ambiguities, in the present disclosure, only the expression "cell tracking" is used, while the step of determining trajectories is referred to in the following as "tracing", and the cells for which trajectories are determined are referred to as "traced cells".

In some examples, all detected and categorized cells may be traced. In other examples, only a proper subset of the detected and categorized cells may be traced. In any case, the at least part of the detected and categorized cells for which the trajectories are determined comprises cells of the at least two different cell types. In other words, all cell types are traced across the frames.

Besides the trajectories, interaction parameters are determined. An interaction parameter for a given cell is a measure of a relation between the given cell and at least another cell. One interaction parameter or a plurality of interaction parameters may be defined for each cell. Interaction parameters may be determined for all traced cells or only for a proper subset of the traced cells. In the latter case, for instance, interaction parameters may be determined only for cells of a specific cell type.

Exemplarily, the interaction parameters may comprise a neighbor parameter, wherein the neighbor for a given cell may be defined as the number of cells within a predetermined or predeterminable radius of the given cell. More specifically, the neighbor parameter for a given cell of a given cell type may be defined as the number of cells of a cell type other than the given cell type within a predetermined or predeterminable radius of the given cell.

In a further example, the interaction parameters may comprise a distance parameter, wherein the distance parameter may be defined as the average distance between a cell of one type and a cell of another type.

In another example, the interaction parameters may comprise a dwelling time, wherein the dwelling time may be defined as the time interval during which a cell position is within a predetermined or predeterminable distance from another cell.

In yet another example, e.g. in a case in which cells of one type kill cells of another type, the interaction parameters may comprise a killing time, wherein the killing time may be defined as the time between the timepoint at which a killer cell first comes within a predetermined or predeterminable distance from a target cell and the timepoint at which the target cell dies. Alternatively or additionally, the interaction parameters may comprise the killing rate, wherein the killing rate may be defined as the number of target cells killed by the killer cells per unit of time.

As mentioned above, more than one interaction parameter may be defined for each cell, so the above examples are not mutually exclusive.

In some examples, similarly to the position, the interaction parameter for a cell may be determined for each image in a plurality of images of the input video, wherein the plurality of images may be a proper or improper subset of the totality of images in the input video.

In other examples, the interaction parameter may be determined in a cumulative manner for a plurality of images. The step of determining interaction parameters is referred to in the following as "analysis", and the cells for which interaction parameters are determined are referred to as "analyzed cells".

The segmentation, classification, tracing and analysis particularly are integrated into an end-to-end, tightly coupled architecture. While segmentation/classification, tracing and analysis occur as distinct steps, they are streamlined into a unified pipeline.

In particular, the outputs from the segmentation/classification stage (such as segmentation masks, bounding boxes, and type probability scores or labels) are passed directly to the tracing stage and those from the segmentation/classification stage and tracing stage to the analysis stage, eliminating the need for intermediate storage or manual data reformatting. This integration advantageously ensures seamless data flow between the components. Furthermore, the pipeline operates within a single framework (e.g., Python with PyTorch and NumPy). A single script or configuration file manages the entire workflow, from reading input images to generating final outputs.

Accordingly, the segmentation/classification stage, the tracing stage and the analysis stage may be tightly integrated within the same workflow, ensuring a seamless handoff of outputs from the machine learning model to the tracing/analysis modules. The method advantageously minimizes intermediate processing overhead by managing all operations in-memory, avoiding delays due to data export or manual intervention.

In summary, the integration of segmentation, classification, tracing and analysis in a pipeline provides an end-to-end solution that optimizes computational efficiency. It further simplifies the user experience, since the data handling required by a user is minimized. The analysis ensures scalability for large-scale co-culture cell tracking tasks, because the interaction parameters can be easily compared across different assay conditions, e.g. with the same microplate or across microplates.

The method described herein reduces computational overhead and/or latency while maintaining flexibility. For example, the segmentation/classification machine learning model can be retrained or fine-tuned for new datasets, while the tracing/analysis stages remain unaffected.

Exemplarily, at the hardware level, the segmentation/classification machine learning model may be run on a graphics processing unit (GPU), exploiting the GPU acceleration to process large microscopy datasets in real-time or near-real-time. The tracing/analysis steps, on the other hand, may be run on a central processing unit (CPU) due to its lightweight computational requirements. This balance ensures efficient utilization of hardware resources.

The method further comprises providing an output comprising the sequence of phase-contrast images, the detection, the categorization, the trajectories and the interaction parameters. In other words, the output may comprise an output video incorporating additional information that is not present in the input video, wherein the additional information comprises the detection, the categorization, the trajectories and the interaction parameters. The output may comprise only a part of the sequence of phase-contrast images, e.g. the at least part of the sequence for which cells were traced and analysed.

More specifically, the detection and categorization may be in the form of segmentation masks e.g. indicating the contours of a cell and of labels indicating the cell type. The trajectories may be in the form of unique cell IDs and coordinates of each cell in every image. The interaction parameters may be in the form of values quantifying the interactions.

The additional information contained in the output may be provided as visual annotations on the sequence of phase-contrast images and/or as a separate file, e.g. a metadata file. For instance, the output video may contain segmentation masks, cell IDs and type labels overlayed on each frame, enabling users to visually identify and track individual cells across the time-lapse sequence.

The interaction parameters may (particularly also) be at least partly shown on the video.

Furthermore, a file, such as a comma-separated value (CSV) file, may be generated alongside the annotated output video to store the cell IDs and their corresponding locations in each image, the type labels, and the interaction parameters.

Further, metadata indicating the specific co-culture environment for the various cells may also be included.

The particular combination of an annotated video and a metadata file provides both visual and quantitative insights, making it easier to analyze cell behaviors and interactions in co-culture environments systematically.

The method described herein allows for accurate and efficient cell tracking for co-cultures. It enables, in particular because of the classification and the analysis, to obtain insight into the co-culture. The behavior of separate cell types within co-cultures can be analyzed without the use of fluorescent labels, which can perturb cells and interactions. The different cell populations can be analyzed separately, which particularly is an important indicator of how cells behave differently when in monoculture versus co-culture.

Among other things, information about cell motility, lineage and/or function may be obtained.

Motility refers to the movement of a cell around the field of view of a microscope image. It may be quantified according to various metrics, such as displacement (distance travelled from its origin point) which can be separated into at least part of the following: Euclidean displacement (length of a straight line from origin point to end point); accumulated displacement (sum of the distance moved in each subsequent frame); velocity (displacement over time); directionality or confinement ratio (accumulated displacement divided by Euclidean displacement).

Lineage refers to the "family tree" of a cell population. A single cell will commonly divide into two daughter cells, each of which will further divide into two, creating four "grand-daughter" cells, and so on.

Cell lineage particularly is the method by which mutations or other specific cell features (such as high expression of a cell surface marker) are propagated. Lineage can be measured by tracing which specific cell produces which daughter cells.

An exemplary application of the method described herein is chimeric antigen receptor (CAR) T-cell therapy. In this case, the co-culture comprises T-cells and tumor cells. The interactions parameters may quantify the average physical proximity of the two cell types, the ratio of interacting effector cells per tumor cell, the dwelling time of effector cells per tumor cell, the rate of tumor cells killing by effector cells, the killing time from interaction to tumor cell death.

As explained above, the purpose of the segmentation/classification stage may be to identify the boundary of each cell in the image and, in addition, to classify each cell in the image as belonging to different cell types. In a particular example, the architecture of a module configured to carry out the segmentation/classification stage may comprise three main components, a backbone component, a detection head and a segmentation head. The input image may be passed to the backbone to extract hierarchical feature maps. These features may then be passed to the detection head, which predicts the bounding boxes (e.g. with confidence scores) and type probability scores or type labels, and the segmentation head, which generates pixel-wise segmentation masks. As discussed above, the final output may include detected instances with their corresponding bounding boxes, type probability scores or labels, and segmentation masks.

Specifically, the architecture may be a modified YOLOv7 architecture (which can be found at this link https://github.com/WonaKinYiu/yolov7), adapted to handle the specific requirements of cell tracking in co-cultures. Exemplarily, the modified YOLOv7 architecture may comprise deformable convolution layers. Thanks to the use of deformable convolution layers, the variable shapes and sizes of cells in co-culture images can be correctly handled. Thus, the segmentation masks can adapt dynamically to morphological variations, enhancing resolution and accuracy in complex scenarios such as co-culture microscopy images.

As explained above, the purpose of the tracing stage may be to identify the trajectories of each cell across the images. In a particular example, the tracing stage may comprise three main steps: state prediction and motion compensation, matching, and updates.

The detected instances output by the segmentation/classification module may be provided as input to the tracing module. In particular, bounding boxes, type probability scores or type labels, and segmentation masks for each detected cell may provide the initial positions and identities for tracing.

In the state prediction and motion compensation step, future positions (i.e. positions in a consecutive or subsequent frame) of detected cells (in a preceding or precedent frame) may be predicted, adjusting for any movements or camera shifts. It helps maintain stable tracing by ensuring that cell locations remain consistent even if the imaging conditions change slightly. Predictions may be made using Kalman filtering, which estimates the future positions of cells by analyzing their current and past states, including position, velocity, and motion trajectory.

Afterwards, in the matching step, the detected cell instances in the consecutive frame may be matched to the predicted positions using e.g. intersection over union (IoU) and re-identification (Re-ID) metrics. IoU matching particularly identifies overlaps between predicted and detected positions, while Re-ID particularly compares appearance features like size and shape when more refinement is needed. Together, these methods ensure that cell identities remain consistent across frames.

Finally, once matches are made, the states of the traced cells are updated, including their current positions, appearance changes, and status (e.g., active, lost, or new). This step maintains accurate information about each cell across frames, handling situations where cells may move out of view or reappear. Exemplarily, the tracing module may be based on BoT-SORT (which can be found at this link https://arxiv.org/pdf/2206.14651).

The purpose of the analysis stage is to compute one or more interaction parameters. An analysis module may receive as input the output of the segmentation/classification module and the output of the tracing module, and may output the interaction parameters based on the input. The analysis module may compute any of the interaction parameters discussed above, e.g. may compute pairwise distances between traced objects, identify temporal overlaps for dwelling times, and measure killing times by tracing events where a killer cell approaches a target cell until its death.

Another aspect of the present invention relates to a computer program product comprising computer-readable instructions, which, when executed by a computer, cause the computer to carry out the method described herein.

Yet another aspect of the present invention relates to a computer system comprising at least one processing unit and at least one memory, wherein the computer system is configured to carry out the method described herein.

A further aspect of the present invention relates to a system. The system comprises: a vessel holder configured to hold a vessel containing a co-culture of cells, wherein the co-culture comprises at least two different cell types;

an imaging apparatus configured to capture an input video comprising a sequence of phase-contrast images of the co-culture of cells;

a computer system comprising at least one processing unit and at least one memory, wherein the computer system is configured to:

- receive the input video;
- perform, by running a machine learning model on the at least one processing unit segmentation to obtain a detection of at least part of the cells in the input video, and classification to obtain a categorization of the at least part of the cells in the input video into the at least two different cell types;
- determine trajectories and interaction parameters of at least part of the detected and categorized cells across at least part of the sequence of phase-contrast images; and
- provide an output comprising the sequence of phase-contrast images, the detection, the categorization, the trajectories and the interaction parameters.

In another words, the system comprises a vessel holder, an imaging apparatus and a computer system according to the preceding aspect, namely configured to carry out the method according to the first aspect.

The vessel holder may comprise a plate onto which the vessel may be placed. A vessel is configured to contain samples, such as a co-culture of cells. The vessel holder may comprise one or more elements configured to keep the vessel in a fixed position, such as protrusions, grooves, clamps. In a particular example, the vessel holder may be a microplate holder configured to hold a microplate containing the co-culture. The vessel holder may be removable from the system and/or could include removable inserts to facilitate holding a variety of different vessels.

The imaging apparatus may comprise a microscope, in particular a phase contrast microscope. The imaging apparatus may be in electrical communication with the computer system and may be controlled by the computer system.

The relative positioning between the imaging apparatus and the vessel holder is such that the imaging apparatus can capture images of the vessel being held by the vessel holder. In some examples, the position of the imaging apparatus relative to the vessel holder may be fixed. In other examples, the system may comprise a steering component configured to position the imaging apparatus relative to the vessel holder, and, specifically, to the vessel held by the vessel holder. For instance, in the case of a microplate comprising a plurality of wells, the imaging apparatus may be moved from one well to the other.

The steering component (e.g. a gantry) may be configured to control the location of the imaging apparatus in at least two directions, relative to the vessel, e.g. in order to facilitate imaging of a plurality of different samples within the vessel. The steering component may also be configured to control the location of the imaging apparatus in a third direction, toward and away from the vessel, e.g. in order to facilitate controlling the focus of images generated using the imaging apparatus. Additionally or alternatively, the imaging apparatus may include one or more actuators to control a focal distance of the imaging apparatus. The steering component may be in electrical communication with the computer system and may be controlled by the computer system.

The steering component may include elements configured to facilitate detection of the absolute and/or relative location of the imaging apparatus relative to the vessel (e.g., to particular well(s) of the vessel). For example, the steering component may include encoders, limit switches, and/or other location-sensing elements. Additionally or alternatively, the imaging apparatus or other elements of the system may be configured to detect fiducial marks or other features of the vessel and/or of the vessel holder in order to determine the absolute and/or relative location of the imaging apparatus relative to the vessel.

Exemplarily, the system may further comprise an incubator. The incubator is configured to control temperature, humidity, and/or other environmental parameters to facilitate culturing of live cell samples that can be imaged, in automated fashion, by the imaging apparatus.

The incubator may be configured to accommodate at least the vessel holder, so that a vessel placed on the vessel holder is also accommodated within the incubator. Furthermore, the incubator may also be configured to accommodate the imaging apparatus. By being positioned within the incubator, the imaging apparatus can image the samples without requiring the samples to be removed from the incubator, a process which could perturb the samples and modify their growth/response to applied experimental conditions. The computer system may be located outside the incubator.

The system may comprise a frame configured to host at least some of its other components, e.g. the vessel holder and the imaging apparatus.

Yet a further aspect of the invention relates to the use of the system of the preceding aspect to analyze a co-culture of cells contained in a vessel, in particular to perform cell tracking of at least two different cell types comprised in the co-culture.

Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.

Figure 1 shows a flow chart of an exemplary method for cell tracking.

Figure 2 shows a schematic representation of an exemplary segmentation and classification stage.

Figure 3 shows a schematic representation of an exemplary tracing and analysis stage.

Figure 4 shows an example of tracing across a pair of frames.

Figure 5 shows a portion of an output video and a bar chart of an interaction parameter relative to the portion of the output video.

Figure 6 shows an exemplary system comprising a vessel holder, an imaging apparatus and a computer system.

Figure 7 shows an exemplary computing environment.

Detailed Description

In the following, a detailed description of examples will be given with reference to the drawings. It should be understood that various modifications to the examples may be made. Unless explicitly indicated otherwise, elements of one example may be combined and used in other examples to form new examples.

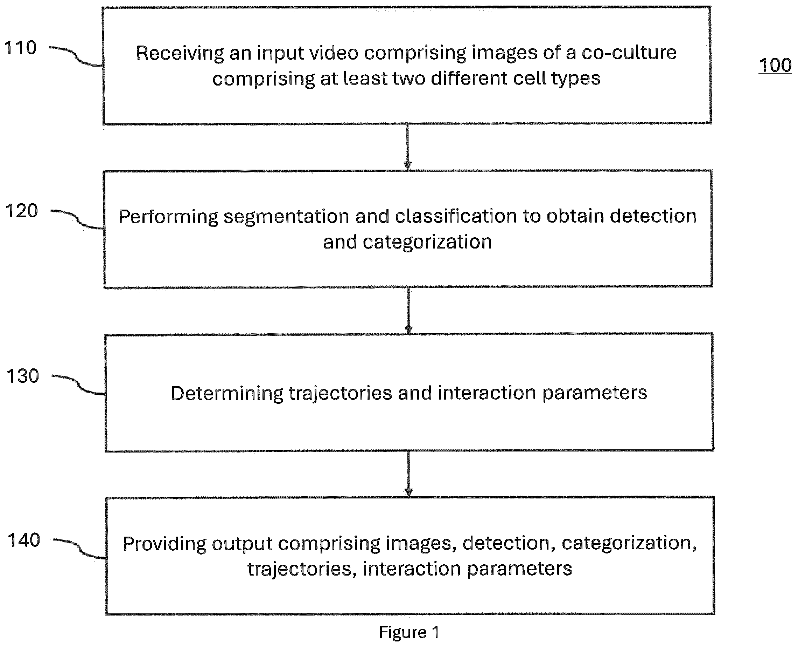

**Figure 1** shows a flow chart of an exemplary method 100 for cell tracking. At 110 an input video is received. The input video comprises a sequence of images of cells of a co-culture obtained with phase-contrast microscopy. The co-culture is observed while being contained in a well of a microplate. The co-culture comprises two different cell types, which may be e.g. immune cells and tumor cells.

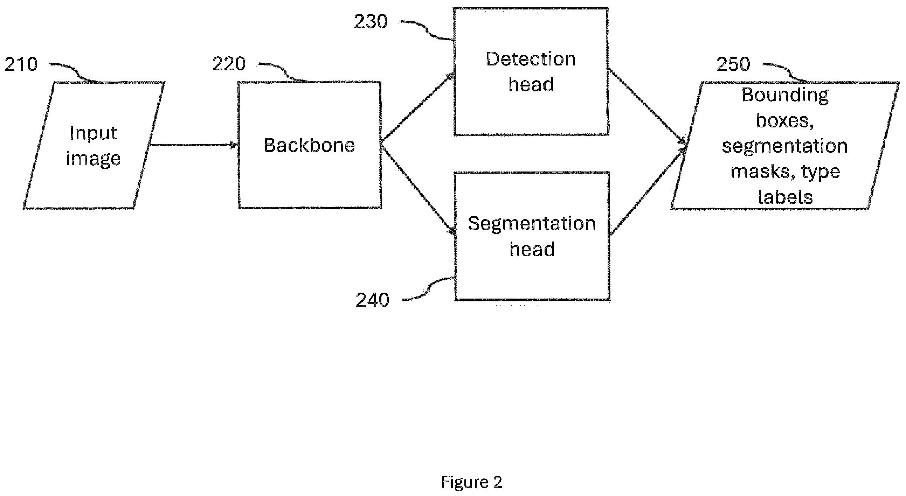

At 120 segmentation and classification are performed as a single stage by using a machine learning model to detect and categorize the cells in the co-culture. In particular, a convolutional neural network is employed. The process of segmentation and classification is carried out on each frame of the input video individually and is shown in more detail in **Figure 2.** Exemplarily, the convolutional neural network runs on a GPU.

The input to the neural network is an input image 210 from the input video: the input image 210 is passed to the backbone 220 to extract hierarchical feature maps, namely two-dimensional arrays of numbers resulting from the application of kernels to the input image and, subsequently, to the feature map of a previous layer.

The hierarchical feature maps may be passed to a detection head 230 as well as to a segmentation head 240. The detection head 230 may provide a bounding box for each cell together with a type label, while the segmentation head 240 generates pixel-wise segmentation masks. Accordingly, the output 250 provided by the neural network comprises bounding boxes, segmentation masks and type labels for part of or for the totality of cells in the input video.

Exemplarily, the neural network is based on YOLOv7. YOLOv7 uses a light backbone that is optimized for speed, integrating efficient modules such as ELAN (Efficient Layer Aggregation Network) to achieve both speed and accuracy. Through modules like ELAN and Dynamic Head Attention, YOLOv7 incorporates spatial attention mechanisms, enabling the network to dynamically prioritize relevant regions in images, significantly improving detection and segmentation in cluttered and noisy environments.

Furthermore, for feature extraction, YOLOv7 combines Feature Pyramid Networks (FPN) with Path Aggregation Networks (PAN), allowing better feature fusion and refinement, which enhances its ability to detect objects of varying scales, especially in dense environments like co-culture microscopy images. This advantageously ensures that both small details (e.g., small cells) and high-level contextual information (e.g., cell clusters) are effectively captured.

YOLOv7 particularly was modified by one or more of the following ways to perform segmentation and classification for phase-contrast images of a co-culture in a microplate:

1) Deformable Convolution

Conventional convolutional layers in YOLOv7 use fixed kernel shapes, which may not adapt well to the irregular and dynamic shapes of cells in microscopy images. Cells, especially in dense co-cultures, exhibit significant morphological variations and spatial arrangements, making conventional convolution less effective for capturing fine-grained details and boundaries.

Therefore, deformable convolution layers particularly are integrated into the YOLOv7 backbone, replacing standard convolutional layers. This modification specifically allows the convolutional kernels to dynamically adjust their receptive fields to align better with cell shapes and boundaries. This flexibility significantly enhances the model's ability to detect and segment cells with irregular shapes or deformities, as well as to handle dense clusters where cells overlap or touch, by focusing on spatially relevant regions.

Thus, deformable convolutions advantageously improve the model's ability to differentiate between closely packed cells, enhancing segmentation accuracy and robustness in dense and morphologically complex microscopy datasets.

2) Anchor Settings Adjustment

Cells in microscopy images are significantly smaller than objects typically found in datasets like COCO (e.g., cars, people, animals). The default anchor settings in YOLOv7 are optimized for larger object scales, making detection of small cells less effective. Therefore, the anchor settings particularly are recalibrated by clustering the bounding box dimensions of the training data using k-means clustering (IoU-based). Smaller anchors particularly are introduced to match the size distribution of cells in the dataset, ensuring improved detection precision for individual cells in dense setups.

3) Increasing Maximum Detections

Natural image datasets like COCO typically have a maximum of 100 objects per image, whereas microscopy images of co-cultures can contain thousands of cells in a single frame (e.g., 2000-3000 cells). The default YOLOv7 settings for maximum detections can cause it to miss many cells.
Hence the maximum detection limit particularly is increased to accommodate up to 3000 detections per image by modifying intermediate tensor sizes and post-processing thresholds. This ensures efficient handling of high object counts without compromising performance.

4) Threshold Adjustments for Segmentation and Classification

Cells often have low contrast or are partially occluded in phase-contrast microscopy images, making them more challenging to segment and classify. The default thresholds for confidence scores and/or IoU overlap in YOLOv7 might lead to discarding valid detections in such scenarios.
The confidence threshold particularly is lowered, and the non-max suppression (NMS) threshold was adjusted to retain more overlapping bounding boxes, ensuring that partially detected cells or clusters are not excluded prematurely.

5) Input Resolution Optimization

Microscopy images are often high-resolution, requiring finer granularity for segmentation and classification. YOLOv7's default input resolution might downscale the image too much, leading to a loss of important details.
The input resolution particularly is increased to better match the high pixel density of the microscopy images. This ensures that small cells remained distinguishable while maintaining computational efficiency.

6) Handling Cell Clusters in Segmentation

In microscopy images, cells often appear in dense clusters, making segmentation challenging. YOLOv7's segmentation head might fail to differentiate closely packed cells.
The segmentation head particularly is fine-tuned with custom loss functions that penalize merging multiple cells into a single mask, enhancing its ability to delineate individual cells in dense regions. The factors involved in the loss functions are:

- Boundary Sensitivity:
  The loss function emphasizes accurate boundary predictions by assigning higher penalties to areas where predicted masks overlap significantly or fail to align with true cell boundaries. By focusing on cell edges, the loss function encourages the model to delineate each cell's shape with precision, improving the separation of adjacent cells.
- Instance Separation:
  In dense clusters, where cells often touch or overlap, the loss function penalizes predictions that produce a single mask for multiple overlapping cells. It ensures that each cell is assigned a distinct mask by reducing overlaps and promoting clear distinctions between different cell instances.
- Gradient Propagation:
  During training, the penalties introduced by the loss function guide the model to refine its predictions, particularly in challenging areas like cell boundaries and overlapping regions. The gradients emphasize these problematic regions, compelling the model to focus on fine-grained details, which helps distinguish one cell from another in densely packed environments.

7) Normalization for Brightness Variability

Microscopy images often exhibit variations in brightness or contrast due to differences in acquisition conditions, which can affect model performance. Consistent preprocessing is essential to ensure robust performance across datasets.

At least one normalization layer particularly is added to preprocess images uniformly by adjusting their brightness and contrast to a standardized range. This advantageously ensures that variability in imaging conditions did not adversely impact the model's segmentation and classification performance.

8) Batch Size and Learning Rate Schedules

The default batch size and learning rate in YOLOv7 are optimized for natural image datasets like COCO but are not ideal for microscopy datasets, which have larger image sizes and higher detection counts. Improper settings can lead to unstable training or slow convergence.

The batch size particularly is adjusted to fit the larger image sizes and GPU memory constraints, while the learning rate particularly is tuned using a cyclical learning rate schedule to ensure faster convergence and avoid overfitting.

For training the segmentation and classification neural network, "ground truth" datasets are created in which one or more images of cells (including co-cultures) were manually annotated. This particularly is or includes a process by which a person draws a line around the outer boundary of the cell (segmentation).

Additionally, in co-culture images these cells were classified as "target cells" or "immune cells".

A third class called "cluster" particularly is also used to indicate areas of the image in which the boundaries of cells could not be confidently identified. Specifically, for the segmentation training, the pre-trained LiveCell model (https://sartorius-research.github.io/LIVECell/), which was originally trained on a large dataset of microscopy images of single-cell cultures, serves as foundation and is fine-tuned using the co-culture annotations to adapt it specifically for the co-culture environment.

For the classification training, images showing breast cancer cells (AU565, MDA-MB-231) mixed with primary immune cells (peripheral blood mononuclear cells / PBMCs) were used.

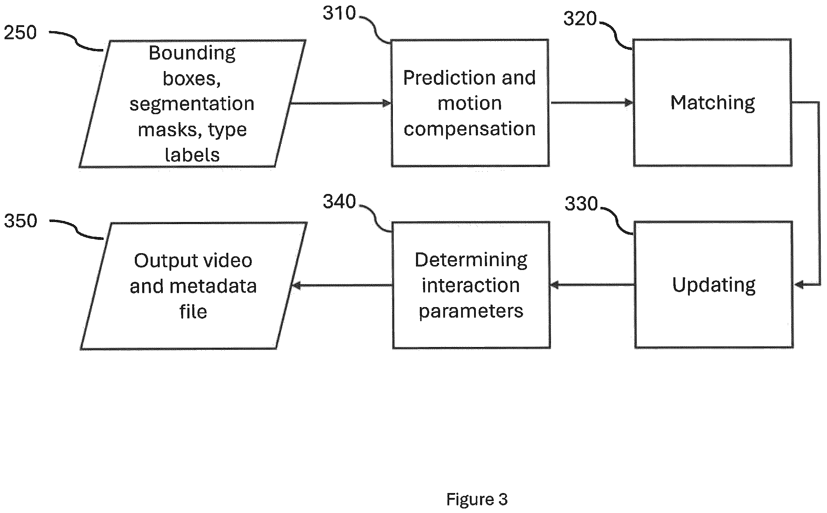

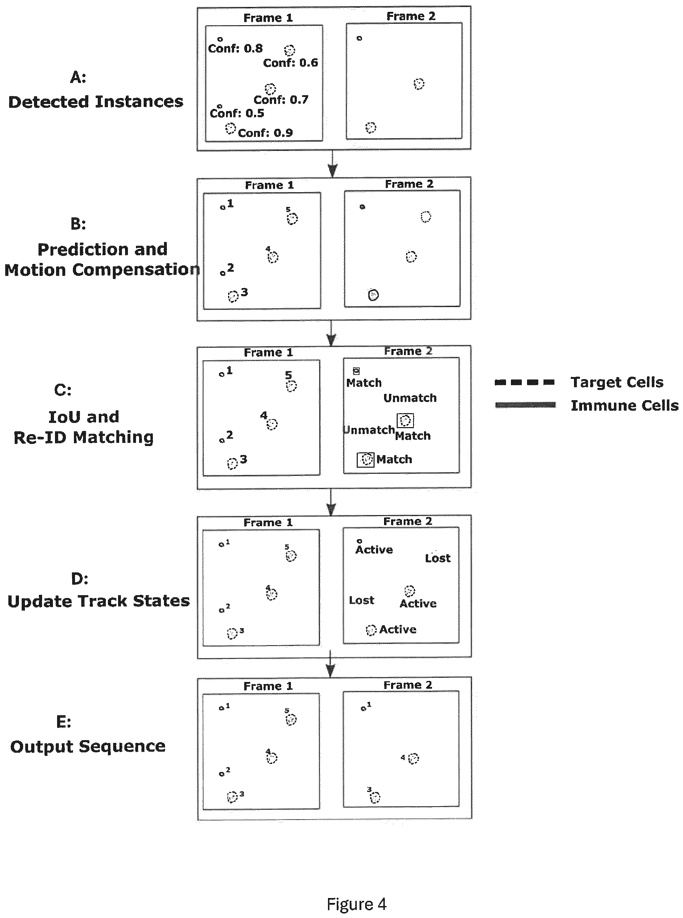

Going back to **Figure 1,** after the segmentation and classification, at 130 trajectories and interaction parameters of the cells across the sequence of the phase-contrast images are determined. This process is shown in more detail in **Figure 3.** The input for tracing the trajectories is seamlessly provided by the output 250 of the segmentation and classification process. Tracing comprises steps 310, 320 and 330, which are also illustrated with an example in **Figure 4,** which comprises five panels, each including two exemplary consecutive frames from an input video. The detected instances in output 250 are shown in panel A: frame 1 contains two immune cells and three tumor cells, while frame 2 contains one immune cell and two tumor cells.

Panel B illustrates step 310, namely prediction and motion compensation. In the state prediction and motion compensation step, unique identifiers are assigned to cells in a frame and their future positions (i.e. positions in a consecutive frame) are predicted, adjusting for any movements or camera shifts.

Predictions are made particularly using Kalman filtering, which estimates the future positions of cells by analyzing their current and past states, including position, velocity, and/or motion trajectory. The Kalman filter specifically predicts the likely location of each cell in the next frame, helping to bridge gaps in detection caused by occlusions or missed detections.

This approach particularly also accounts for slight variations due to camera shifts or imaging distortions, ensuring that the tracking remains stable across sequential frames by aligning predicted positions with detections provided by the YOLOv7 module. Panel B shows cell IDs 1 to 5 in frame 1 and predicted positions in frame 2.

Panel C illustrates step 320, i.e. the matching between the predicted positions and the actual detection instances in frame 2. Indeed, in the matching step 320, intersection over union (IoU) matching identifies overlaps between predicted and detected positions, while re-identification (Re-ID) compares appearance features like size and shape when more refinement is needed.

In the example of panel C, two of the predicted positions are left unmatched, while three of the predicted positions are matched to actual cells in frame 2.

Finally, at step 330, the states of the traced cells are updated, including their current positions, appearance changes, and/or status (e.g., active, lost, or new). This step maintains accurate information about each cell across frames, handling situations where cells may move out of view or reappear. In the example shown in panel D of **Figure 4,** the status of three cells is active, while two (which have disappeared from frame 1 to frame 2) are considered lost.

Panel E shows the output of tracing, namely the trajectories of cells 1, 3 and 4, which have been uniquely identified in both frames.

Exemplarily, the tracing is performed using BoT-Sort as adapted to handle the challenges of co-culture cell tracking. In particular, the tracking thresholds are adjusted to accommodate the dense and dynamic nature of cells in microscopy images. These modifications ensure robust tracking of cells even in crowded environments, where overlapping and small object sizes can make tracking more challenging.

The default tracking thresholds in BoT-Sort particularly are optimized for natural object tracking in datasets like MOT (Multiple Object Tracking), where objects are larger and less densely packed. However, in co-culture microscopy images, cells are smaller, more numerous, and often overlap, requiring lower thresholds to ensure consistent tracking without prematurely discarding valid tracks.

Accordingly, the IoU and confidence score thresholds particularly are adapted to better handle cases where cells have partial occlusions or low detection confidence. These adjustments ensure that cell trajectories are maintained even when detections are imperfect.

Additionally, the maximum distance for associating detections across frames particularly is adapted, as cells typically move shorter distances compared to objects in natural scenes. This change minimizes the risk of mismatches in high-density regions.

These one or more adaptations allow BoT-Sort to maintain consistent tracking of individual cells across frames, making it suitable for analyzing co-culture environments where cell densities and morphologies vary significantly.

The combined performance of detection and tracing can be evaluated using various evaluation metrics, wherein each metric provides a different perspective. Five possible metrics are reported below.

Multiple Object Tracking Accuracy (MOTA)

Multiple object tracking accuracy particularly measures or indicates the overall accuracy of both the tracing and the detection.

$$MOTA = 1 - \frac{\sum_t (m_t + fp_t + mme_t)}{\sum_t g_t}$$

In this equation, $m_t$, $fp_t$, and $mme_t$ are the number of misses, false positives, and mismatches, while $g_t$ refers to the objects in the ground truth. Misses particularly are the objects present in the ground truth but not detected by the detection algorithm. False positives particularly are the objects which are not present in the ground truth, but are nonetheless detected as objects by the detection algorithm. Mismatches particularly occur when an object is falsely related to the ground truth of some other object due to false tracing.

Identification F1 Score (IDF$_1$)

IDF$_1$ particularly calculates a bijective mapping between the sets of ground truth trajectories and prediction trajectories. The metric IDF$_1$ is the ratio of correctly identified detections over the average number of ground truth and computed detections:

$$IDF_1 = \frac{2IDTP}{2IDTP + IDFP + IDFN}$$

IDTP (Identity true positives) particularly is the number of true positive ID matches; this can be seen as the percentage of detections correctly assigned in the whole sequence. IDFP (Identity false positives) particularly denotes the sum of false positive IDs; this can be seen as the percentage of detections falsely assigned in the whole sequence. IDFN (Identity false negatives) particularly is the number of false negative IDs; this can be seen as the percentage of detections undetected in the whole sequence.

Identity Switches (IDs)

Identity Switches particularly is the number of identity switches i.e., how many times a given trajectory changes from one ground truth object to another.

Mostly Tracked (MT)

If the object particularly is successfully tracked for at least 80% of its lifespan, it is regarded as Mostly Tracked.

Mostly Lost (ML)

If the object is successfully tracked for at most 20% of its life span, it particularly is regarded as Mostly Lost.

After tracing the cells across the sequence of images, at 340 interaction parameters are determined for the cells. For example, an interaction parameter for a target cell (or tumor cell) is defined as the number of immune cells within a given radius of the target cell.

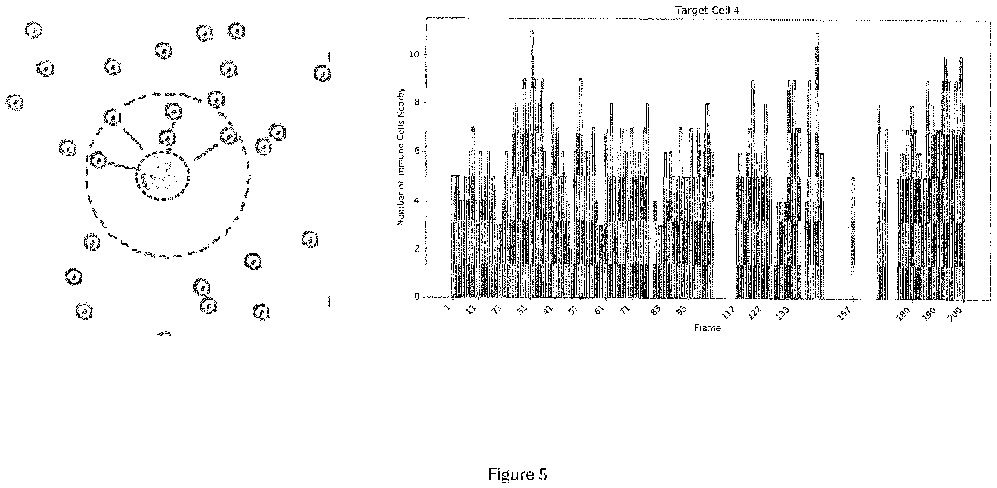

**Figure 5** shows on the left-hand side a detail of a frame with a target cell (target cell 4) having a circle with a radius of about 50 micron drawn around it. The interaction parameter for target cell 4, namely the number of immune cells within the about 50 micron radius, is shown on the right-hand side of **Figure 5** for the various frames of the sequence.

The following table refers to frame 1, in which there are five immune cells within the about 50 micron radius. The position (X and Y coordinates of the center of the cell) and distance of these immune cells from the target cell are reported in the table (the unit is microns).

| Frame | Targe_ID | Immune_Count | Immune_Center_X_um | Immune_Center_Y_um | Distance_um |
|---|---|---|---|---|---|
| 1 | 4 | 5 | 67.7561559295654 | 259.319323425293 | 43.120476635379 |
| 1 | 4 | 5 | 147.477268371582 | 244.864201660156 | 43.9959619961202 |
| 1 | 4 | 5 | 113.559467163086 | 229.984617919922 | 38 1059056323811 |
| 1 | 4 | 5 | 76.6206819915771 | 234.219956970215 | 47.4426986852336 |
| 1 | 4 | 5 | 109.939426269531 | 246.652680664062 | 21.2722126407363 |

Going back to **Figures 3** and **1,** method 100 comprises, at 140, providing an output comprising the sequence of images from the input video with the addition of the detection, categorization, trajectories and interaction parameters.

In particular, as shown at 350, the output comprises an output video with annotations and a metadata file. In particular, the output video contains segmentation masks, cell IDs and type labels overlayed on each frame. Furthermore, a CSV file stores the cell IDs and their corresponding locations in each image, the type labels, and the interaction parameters.

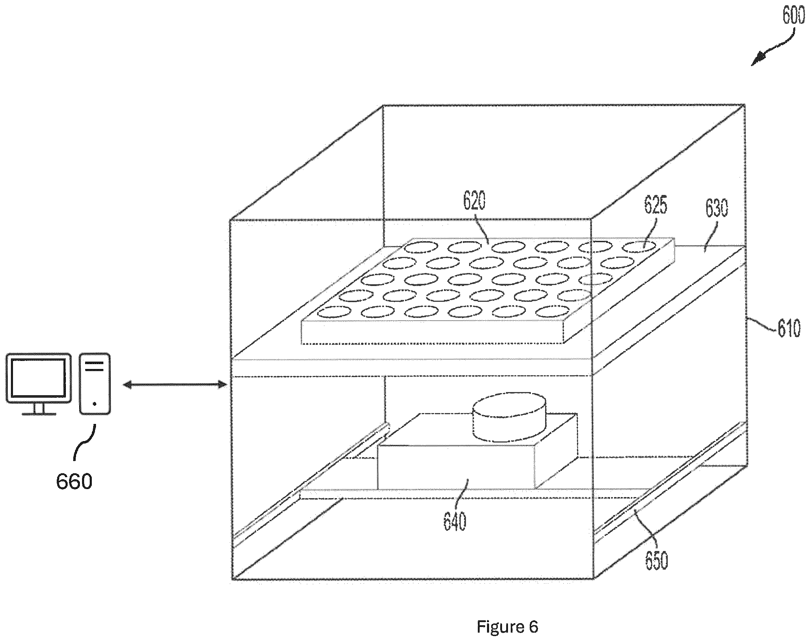

**Figure 6** shows an exemplary system 600 comprising a vessel holder 630, an imaging apparatus 640 and a computer system 660. The system 600 includes a frame 610 to which other elements of the system 600 are attached. The frame 610 may be configured (e.g., sized) in order to fit within an incubator. The system 600 includes a culture cell vessel 620 that is removably placed within a vessel holder 630 that is coupled to the frame 610. The system 600 additionally includes a steering component 650 configured to position an imaging apparatus 640 relative to the vessel 620 such that the imaging apparatus 640 can operate to generate images of the contents of individual wells of the vessel 620 (e.g., the example well 625). Furthermore, the system 600 includes a computer system 660 configured to carry out the method of **Figure 1.**

The imaging apparatus 640 can include a phase-contrast microscope, one or more illumination sources, one or more optical filters, and/or other elements configured to facilitate imaging samples contained within the vessel 620. In some examples, the imaging apparatus 640 includes elements disposed on both sides of the vessel 620 (e.g., a source of coherent, polarized, monochromatic, or otherwise-specified illumination light in order to facilitate, e.g., phase contrast imaging of biological samples). In such examples, elements on both sides of the vessel 620 may be coupled to respective different gantries, to the same gantry, and/or elements on one side of the vessel 620 may not be movable relative to the vessel 620.

The steering component 650 is coupled to the frame 610 and the imaging apparatus 640 and configured to control the location of the imaging apparatus 640 in at least two directions relative to the vessel 620, in order to facilitate imaging of a plurality of different samples within the vessel 620. The steering component 650 may also be configured to control the location of the imaging apparatus 640 in a third direction, toward and away from the vessel 620, in order to facilitate controlling the focus of images generated using the imaging apparatus 640 and/or to control a depth of material, within the vessel 620, that can be imaged using the imaging apparatus 640. Additionally or alternatively, the imaging apparatus 640 may include one or more actuators to control a focal distance of the imaging apparatus 640.

The steering component 650 may include elements configured to facilitate detection of the absolute and/or relative location of the imaging apparatus 640 relative to the sample container 620 (e.g., to particular well(s) of the vessel 620). For example, the steering component 650 may include encoders, limit switches, and/or other location-sensing elements. Additionally or alternatively, the imaging apparatus 640 or other elements of the system may be configured to detect fiducial marks or other features of the vessel 620 and/or of the vessel holder 630 in order to determine the absolute and/or relative location of the imaging apparatus 640 relative to the vessel 620.

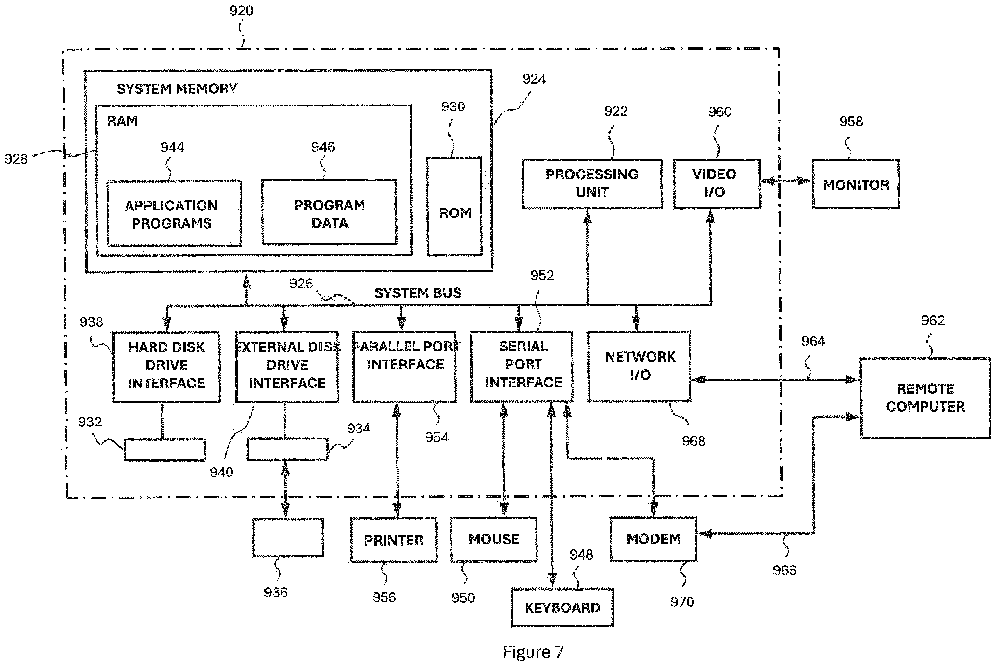

The computer system 660 is connected to other elements of the system 600, e.g. the imaging apparatus 640 and the steering component 650, e.g., connected via a direct wired or wireless connection, via a local network, and/or via a secured connection over the internet. Specifically, the computer system 660 may be configured as described herein with respect to below **Figure 7.**

**Figure 7** shows an exemplary system for implementing the invention including a general-purpose computing device in the form of a conventional computing environment 920 (e.g. a personal computer). The conventional computing environment includes at least one processing unit 922, a system memory 924, and a system bus 926. The system bus couples various system components including the system memory 924 to the at least one processing unit 922.

The at least one processing unit 922 may perform arithmetic, logic and/or control operations by accessing the system memory 924. The at least one processing unit 922 may comprise a central processing unit (CPU) and a graphics processing unit (GPU), which is designed for digital image processing but is also suitable to perform non-graphic calculations. A CPU may be optimized for sequential processing, while a GPU may be optimized for parallel processing.

The system memory 924 may store information and/or instructions for use in combination with the at least one processing unit 922. The system memory 924 may include volatile and non-volatile memory, such as a random access memory (RAM) 928 and a read only memory (ROM) 930.

A basic input/output system (BIOS) containing the basic routines that helps to transfer information between elements within the personal computer 920, such as during start-up, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the personal computer 920. The data structures may include relevant data for the implementation of the method for cell tracking of co-cultures, as described above. The relevant data may be organized in a database, for example a relational database management system or an object-oriented database management system.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946. The application programs may include at least a part of the functionality as depicted in Figures 1 to 3.

A user may enter commands and information, as discussed below, into the personal computer 920 through input devices such as keyboard 948 and mouse 950. Other input devices (not shown) may include a microphone (or other sensors), joystick, game pad, scanner, or the like. These and other input devices may be connected to the at least one processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the at least one processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computer environment 920 may operate in a networked environment using connections to one or more electronic devices. **Figure 7** depicts the computer environment networked with remote computer 962. The remote computer 962 may be another computing environment such as a server, a router, a network PC, a peer device or other common network node, and may include many or all of the elements described above relative to the computing environment 920. The logical connections depicted in **Figure 7** include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. When used in a WAN networking environment, the computing environment 920 may include a modem 970 or other means for establishing communications over the WAN 966. The modem 970, which may be internal or external to computing environment 920, is connected to the system bus 926 via the serial port interface 952. In a networked environment, program modules depicted relative to the computing environment 920, or portions thereof, may be stored in a remote memory storage device resident on or accessible to remote computer 962. Furthermore, other data relevant to the method for cell tracking in co-cultures (described above) may be resident on or accessible via the remote computer 962. It will be appreciated that the network connections shown are exemplary and other means of establishing a communications link between the electronic devices may be used.

The above-described computing system is only one example of the type of computing system that may be used to implement the method for cell tracking in co-cultures.

**Claims**

1. A computer-implemented method comprising:

   receiving (110) an input video comprising a sequence of phase-contrast images of a co-culture of cells in a cell culture vessel, wherein the co-culture comprises at least two different cell types;
   performing (120), by running a machine learning model on at least one processing unit:
   segmentation to obtain a detection of at least part of the cells in the input video, and classification to obtain a categorization of the at least part of the cells in the input video into the at least two different cell types;
   determining (130) trajectories and interaction parameters of at least part of the detected and categorized cells across at least part of the sequence of phase-contrast images;
   providing (140) an output comprising the sequence of phase-contrast images, the detection, the categorization, the trajectories and the interaction parameters.

2. The computer-implemented method of claim 1, wherein the at least one processing unit is a graphical processing unit and wherein determining (130) trajectories and interaction parameters comprises using a central processing unit.

3. The computer-implemented method of any one of the preceding claims, wherein the co-culture comprises only two different cell types.

4. The computer-implemented method of any one of the preceding claims, wherein the interaction parameters comprise a neighbor parameter, the neighbor parameter for a given cell of a given cell type of the at least two different cell types being the number of a cell type other than the given cell type within a predetermined or predeterminable radius of the given cell.

5. The computer-implemented method of any one of the preceding claims, wherein the interaction parameters comprise a dwelling time, the dwelling time for a given cell being the time interval during which the position of the given cell is within a predetermined or predeterminable distance from another cell.

6. The computer-implemented method of any one of the preceding claims, wherein the interaction parameters comprise a distance parameter, the distance parameter for a given cell of a given cell type of the at least two different cell types being the average distance between a cell of the given cell type and a cell of another cell type.

7. The computer-implemented method of any one of the preceding claims, wherein the at least two different cell types comprise a first cell type being killing cell and a second cell type being target cell.

8. The computer-implemented method of claim 7, wherein the interaction parameters for a killing cell comprise a killing time, the killing time being the time between the timepoint at which the killing cell first comes within a predetermined or predeterminable distance from a target cell and the timepoint at which the target cell dies.

9. The computer-implemented method of claim 7 or 8, wherein the interaction parameters for a killing cell comprise a killing rate, the killing rate being the number of target cells killed by killer cells per unit of time.

10. The computer-implemented method of any one of the preceding claims, wherein the segmentation and classification are integrated.

11. The computer-implemented method of claim 10, wherein performing the segmentation and classification comprises obtaining segmentation masks, bounding boxes and cell type probabilities concomitantly.

12. A computer program product comprising computer-readable instructions, which, when executed by a computer, cause the computer to carry out the method of any one of the preceding claims.

13. A computer system comprising at least one processing unit and at least one memory, wherein the computer system is configured to carry out the method of any one of claims 1 to 11.

14. A system comprising:

a vessel holder (630) configured to hold a vessel (620) containing a co-culture of cells, wherein the co-culture comprises at least two different cell types;
an imaging apparatus (640) configured to capture an input video comprising a sequence of phase-contrast images of the co-culture of cells;
a computer system (660) comprising at least one processing unit and at least one memory,

wherein the computer system (660) is configured to:

- receive (110) the input video;
- perform (120), by running a machine learning model on the at least one processing unit segmentation to obtain a detection of at least part of the cells in the input video, and classification to obtain a categorization of the at least part of the cells in the input video into the at least two different cell types;
- determine (130) trajectories and interaction parameters of at least part of the detected and categorized cells across at least part of the sequence of phase-contrast images; and
- provide (140) an output comprising the sequence of phase-contrast images, the detection, the categorization, the trajectories and the interaction parameters.

15. Use of a system according to claim 14 to analyze a co-culture of cells contained in a vessel (620), in particular to perform cell tracking of at least two different cell types comprised in the co-culture.

**Amended claims in accordance with Rule 137(2) EPC.**

1. A computer-implemented method comprising:

receiving (110) an input video comprising a sequence of phase-contrast images of a co-culture of cells in a cell culture vessel, wherein the co-culture comprises at least two different cell types;
performing (120), by running a machine learning model on at least one processing unit:
segmentation to obtain a detection of at least part of the cells in the input video, and classification to obtain a categorization of the at least part of the cells in the input video into the at least two different cell types;
determining (130) trajectories and interaction parameters of at least part of the detected and categorized cells across at least part of the sequence of phase-contrast images;
providing (140) an output comprising the sequence of phase-contrast images, the detection, the categorization, the trajectories and the interaction parameters; wherein the interaction parameters comprise a dwelling time, the dwelling time for a given cell being the time interval during which the position of the given cell is within a predetermined or predeterminable distance from another cell.

2. The computer-implemented method of claim 1, wherein the at least one processing unit is a graphical processing unit and wherein determining (130) trajectories and interaction parameters comprises using a central processing unit.

3. The computer-implemented method of any one of the preceding claims, wherein the co-culture comprises only two different cell types.

4. The computer-implemented method of any one of the preceding claims, wherein the interaction parameters comprise a neighbor parameter, the neighbor parameter for a given cell of a given cell type of the at least two different cell types being the number of a cell type other than the given cell type within a predetermined or predeterminable radius of the given cell.

5. The computer-implemented method of any one of the preceding claims, wherein the interaction parameters comprise a distance parameter, the distance parameter for a given cell of a given cell type of the at least two different cell types being the average distance between a cell of the given cell type and a cell of another cell type.

6.   The computer-implemented method of any one of the preceding claims, wherein the at least two different cell types comprise a first cell type being killing cell and a second cell type being target cell.

7.   The computer-implemented method of claim 6, wherein the interaction parameters for a killing cell comprise a killing time, the killing time being the time between the timepoint at which the killing cell first comes within a predetermined or predeterminable distance from a target cell and the timepoint at which the target cell dies.

8.   The computer-implemented method of claim 6 or 7, wherein the interaction parameters for a killing cell comprise a killing rate, the killing rate being the number of target cells killed by killer cells per unit of time.

9.   The computer-implemented method of any one of the preceding claims, wherein the segmentation and classification are integrated.

10.   The computer-implemented method of claim 9, wherein performing the segmentation and classification comprises obtaining segmentation masks, bounding boxes and cell type probabilities concomitantly.

11.   A computer program product comprising computer-readable instructions, which, when executed by a computer, cause the computer to carry out the method of any one of the preceding claims.

12.   A computer system comprising at least one processing unit and at least one memory, wherein the computer system is configured to carry out the method of any one of claims 1 to 10.

13.   A system comprising:

   a vessel holder (630) configured to hold a vessel (620) containing a co-culture of cells, wherein the co-culture comprises at least two different cell types;
   an imaging apparatus (640) configured to capture an input video comprising a sequence of phase-contrast images of the co-culture of cells;
   a computer system (660) comprising at least one processing unit and at least one memory,

      wherein the computer system (660) is configured to:

         - receive (110) the input video;
         - perform (120), by running a machine learning model on the at least one processing unit segmentation to obtain a detection of at least part of the cells in the input video, and classification to obtain a categorization of the at least part of the cells in the input video into the at least two different cell types;
         - determine (130) trajectories and interaction parameters of at least part of the detected and categorized cells across at least part of the sequence of phase-contrast images; and
         - provide (140) an output comprising the sequence of phase-contrast images, the detection, the categorization, the trajectories and the interaction parameters;

      wherein the interaction parameters comprise a dwelling time, the dwelling time for a given cell being the time interval during which the position of the given cell is within a predetermined or predeterminable distance from another cell.

14.   Use of a system according to claim 13 to analyze a co-culture of cells contained in a vessel (620), in particular to perform cell tracking of at least two different cell types comprised in the co-culture.

Figure 1

Figure 2

250 — Bounding boxes, segmentation masks, type labels

310 — Prediction and motion compensation

320 — Matching

330 — Updating

340 — Determining interaction parameters

350 — Output video and metadata file

Figure 3

Figure 4

Figure 5

EP 4 787 295 A1

EP 4 787 295 A1

Figure 6

Figure 7

Europäisches
Patentamt

European
Patent Office

Office européen
des brevets

# EUROPEAN SEARCH REPORT

**Application Number**

EP 25 15 5170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/036156 A1 (HO CHI-SING [US] ET AL) 2 February 2023 (2023-02-02) | 1-4,7, 10,12-15 | INV. G06T7/00 |
| A | * See written opinion. * | 5,6,8,9, 11 | G06T7/174 G06T7/20 G06V20/69 |
| | ----- | | |
| X | SATHIYAPRASAD B ET AL: "Automated Immune Cell Classification Using Image Processing Techniques", 2025 6TH INTERNATIONAL CONFERENCE ON MOBILE COMPUTING AND SUSTAINABLE INFORMATICS (ICMCSI), IEEE, 7 January 2025 (2025-01-07), pages 1782-1790, XP034842751, DOI: 10.1109/ICMCSI64620.2025.10883577 [retrieved on 2025-02-20] | 1,2, 10-15 | |
| A | * See written opinion. * | 3-9 | |
| | ----- | | |
| A | BAYRAMOGLU NESLIHAN ET AL: "Detection of Tumor Cell Spheroids from Co-cultures Using Phase Contrast Images and Machine Learning Approach", 18TH INTERNATIONAL CONFERENCE ON PATTERN RECOGNITION (ICPR'06), IEEE COMPUTER SOCIETY, US, 24 August 2014 (2014-08-24), pages 3345-3350, XP032698219, ISSN: 1051-4651, DOI: 10.1109/ICPR.2014.576 [retrieved on 2014-12-04] * the whole document * | 1-15 | TECHNICAL FIELDS SEARCHED (IPC) G06T G06V |
| | ----- | | |
| | -/-- | | |

The present search report has been drawn up for all claims

| Place of search | Date of completion of the search | Examiner |
|---|---|---|
| Munich | 1 July 2025 | Nicolau, Stephane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ASMAR ANTHONY J. ET AL: "High-volume, label-free imaging for quantifying single-cell dynamics in induced pluripotent stem cell colonies", PLOS ONE, vol. 19, no. 2, 20 February 2024 (2024-02-20), page e0298446, XP093150256, US ISSN: 1932-6203, DOI: 10.1371/journal.pone.0298446 Retrieved from the Internet: URL:https://www.ncbi.nlm.nih.gov/pmc/articles/PMC10878516/pdf/pone.0298446.pdf> * the whole document * | 1-15 | |

-----

TECHNICAL FIELDS
SEARCHED (IPC)

The present search report has been drawn up for all claims

| Place of search | Date of completion of the search | Examiner |
|---|---|---|
| Munich | 1 July 2025 | Nicolau, Stephane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 15 5170

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | Publication date | Patent family member(s) | | Publication date |
|---|---|---|---|---|
| US 2023036156 A1 | 02-02-2023 | EP | 4377693 A1 | 05-06-2024 |
| | | JP | 2024529420 A | 06-08-2024 |
| | | US | 2023036156 A1 | 02-02-2023 |
| | | WO | 2023009870 A1 | 02-02-2023 |

For more details about this annex : see Official Journal of the European Patent Office, No. 12/82

EPO FORM P0459